# EUROPEAN PATENT APPLICATION

(11) **EP 3 829 106 A1**
(43) Date of publication of application: **02.06.2021**
(21) Application number: 20209947.9
(22) Date of filing: 25.11.2020
(51) Int. Cl.: H04L 12/10

(54) **METHOD AND CONTROLLER FOR DETERMINING RELATIVE POSITIONS OF TERMINALS**

(30) Priority: 27.11.2019 GB 201917288
(71) Applicant: CANON KABUSHIKI KAISHA, OHTA-KU Tokyo 146-8501 (JP)
(72) Inventor: MERLET, Hervé, 35530 SERVON SUR VILAINE (FR); LAGRANGE, Pascal, 35520 LA CHAPELLE DES FOUGERETZ (FR); MAJANI, Eric, 35760 SAINT-GREGOIRE (FR)
(74) Representative: Santarelli

(57) **Abstract**

There is provided a method of determining relative positions of at least two terminals of a plurality of terminals, the plurality of terminals including a master terminal and being connected to the same port of a power source equipment, the method comprising the following steps performed at a controller of the master terminal:
scheduling (202) successive voltage drops for each of the at least two terminals of the plurality of terminals;
obtaining (203), for each scheduled voltage drop, a set of voltage measurements performed at the bounds of each of the at least two terminals of the plurality of terminals;
determining (204) relative positions of each of the at least two terminals compared to the port of the power source equipment based on the obtained sets of voltage measurements.

## Description

### FIELD OF THE INVENTION

The present invention relates to a power over cable system. More specifically, the present invention relates to a method for determining relative positions of devices of a plurality of terminals connected to the same port of a power source equipment.

### BACKGROUND OF THE INVENTION

In power over cable systems, such as Power over Ethernet (PoE) and Power over Coax (PoC), one or more devices are powered over network cables by an item of power sourcing equipment.

The power sourcing equipment (PSE) is a device such as a network switch that provides (sources) power on the network cables. A powered device (PD) refers to an apparatus powered by the PSE and thus consuming energy. Examples of powered devices include analog cameras, IP cameras including pan-tilt-zoom (PTZ) cameras, wireless access points (AP), and VoIP phones.

Generally speaking, the power over cable technology allows removal of separate data cables and power supplies requirements which would otherwise be needed to power the devices. This allows for more time and cost efficient installation for installers. However, the power distribution over data cables suffers from limitations on the total power that can be carried, and from a significant power loss in the cables due to the relatively low carried voltage (e.g. a typical voltage being comprised between 48 and 56 V). As known in the art, the total power consumption on one network segment is the accumulation of the power consumption of each device and the power dissipated in the cable due to the resistivity of the cable (Joule effect).

When a plurality of PDs are interconnected by a cable segment to a PSE port, it is not possible to know the exact amount of power the PSE should deliver as the PSE cannot check individually the power requirements of each PD. Furthermore, as the dissipated power (aforementioned Joule effect) depends on the cable length, each PD receives different voltage, and hence has a different amount of available power at its bounds. The available power at a given PD thus depends on the shape of the network segment.

The power requirements of each PD terminal is usually managed by a controller connected to the PD or included in it, for instance as a PoC/PoE adapter connected to a PoE terminal such as an IP camera, through an Ethernet cable. The controller is thus configured to negotiate the power delivery from the PSE, typically based on the power class of the terminal.

However, the configuration of the power over cable system may change over time, for instance by addition or disconnection of a PD and it may thus be difficult to know the power consumption at a given time instant.

Furthermore, the topology of network segment, and more specifically how many devices are coupled to each port of the PSE and how are they connected to this port (i.e. the shape of the network segment connected to each port of the PSE) is unknown at the system start-up. It is thus difficult to know in advance the total power consumption that will be drawn on the port so as to prevent a power failure at the network start-up or during a hot-plug of one or several devices (that is to say, adding one or more devices while the system is operating).

The determination of the topology by means of a human intervention is not be adapted for systems comprising a high number of PDs, or even for some applications such as video surveillance requiring continuous operating and which will badly suffer from a long maintenance interruption for determining the topology.

Hence, there is a need for improving topology determination methods.

### SUMMARY OF THE INVENTION

The present invention has been devised to address at least one of the foregoing concerns.

According to a first aspect of the invention, there is provided a method of determining relative positions of at least two terminals of a plurality of terminals, the plurality of terminals including a master terminal and being connected to the same port of a power source equipment, the method comprising the following steps performed at a controller of the master terminal:
scheduling successive voltage drops for each of the at least two terminals of the plurality of terminals;
obtaining, for each scheduled voltage drop, a set of voltage measurements performed at the bounds of each of the at least two terminals of the plurality of terminals;
determining relative positions of each of the at least two terminals compared to the port of the power source equipment based on the obtained sets of voltage measurements.

Thanks to the first aspect of the invention, for each network segment, the relative positions of the terminals of a given network segment compared to the port of the power source may be obtained. Therefore, using this method at each network segment, a complete mapping of a power over cable system may also be obtained. Indeed, each terminal may be positioned compared to the port of the power source equipment to which it is connected, and compared to the terminals being to the same network segment.

This is achieved by analysing and comparing the obtained voltage measurements at each terminal of a given network segment for each voltage drops successively performed at the terminals' bounds of the given network segment.

According to some embodiments, the step of determining relative positions of the at least two terminals comprises:
determining, if all the values of one set of voltage measurements associated with the scheduled voltage drop at a first terminal of the at least two terminal are greater than all the values of another set of voltage measurements associated with the scheduled voltage drop at a second terminal of the at least two terminals, that the first terminal is upstream from the second terminal, compared to the port of the power source equipment, and otherwise the first terminal and the second terminal are connected on different parallel branches.

According to some embodiments, the step of scheduling a voltage drop for each of the at least two terminals comprises:
scheduling successive instants for authorizing the voltage drop at each of the at least two terminals.

According to some embodiments, the step of scheduling a voltage drop for each of the at least two terminals further comprises:
sending requests to perform the voltage drops based on the scheduled instants.

According to some embodiments, the step of obtaining, for each scheduled voltage drop, a set of voltage measurements comprises:
requesting voltage measurements at each of the at least two terminals of the plurality, for each voltage drop performed according to the scheduling.

According to some embodiments, additional voltage measurements at the two terminals are made before and/or after the voltage drops.

According to some embodiments, the step of obtaining, for each scheduled voltage drop, a set of voltage measurements further comprises:
receiving, for each scheduled voltage drop, the set of voltage measurements performed at the bounds of each of the at least two terminals of the plurality of terminals.

According to a second aspect of the invention, there is provided a controller of a master terminal device configured to determine relative positions of at least two terminals of a plurality of terminals, the plurality of terminals including the master terminal and being connected to the same port of a power source equipment, the controller being configured to perform the following steps:
scheduling successive voltage drops for each of the at least two terminals of the plurality of terminals;
obtaining, for each scheduled voltage drop, a set of voltage measurements performed at the bounds of each of the at least two terminals of the plurality of terminals;
determining relative positions of each of the at least two terminals compared to the port of the power source equipment based on the obtained sets of voltage measurements.

According to a third aspect of the invention, there is provided a computer program product for a programmable apparatus, the computer program product comprising instructions for carrying out the method aforementioned when the program is loaded and executed by a programmable apparatus.

According to a fourth aspect of the invention, there is provided a non-transitory computer-readable medium storing a program which, when executed by a microprocessor or computer system in a device of a power-over-cable system, causes the device to perform the method aforementioned.

### BRIEF DESCRIPTION OF THE DRAWINGS

Other particularities and advantages of the invention will also emerge from the following description, illustrated by the accompanying drawings, in which:
**Figure 1** illustrates an example of a power over cable system comprising a power sourcing equipment (PSE) and a plurality of powered devices (PD) each including a terminal;
**Figure 2** is a general flow chart illustrating general steps of a method of determining relative positions of at least two terminals according to an embodiment of the present invention;
**Figures 3a****,** **4a****,** **5a** **and** **3b****,** **4b****,** **5b** illustrate three examples of shapes for a network segment connected to a port of the PSE (Figures 3a, 4a and 5a) and corresponding voltage measurements at terminals bounds of the network segment in each example (Figures 3b, 4b and 5b);
**Figure 6** is a flow chart detailing steps of a method of determining relative positions of at least two PDs according to an embodiment of the present invention;
**Figures 7a, 7b** and **7c** are circuit plans illustrating performance of calibrated voltage drops at the bounds of a PD;
**Figure 8** illustrates a group of messages that may be exchanged between the devices of the invention, according to an embodiment.

Note that same references are used when designating same elements.

### DETAILED DESCRIPTION OF EMBODIMENTS OF THE INVENTION

Embodiments of the invention relate in general to a method of determining relative positions of at least two terminals of a plurality of terminals connected to the same port of a power source equipment (PSE)in a power system.

For the sake of illustration, embodiments of the invention are presented in the context of a Power over Cable (specifically, coaxial cables) video surveillance network. Nevertheless, other embodiments of the invention may be envisaged outside this context such as a non-video surveillance network.

In the following description, the terms "network segment" and "power segment" refer to the bus (or buses) connected to a given port of the PSE.

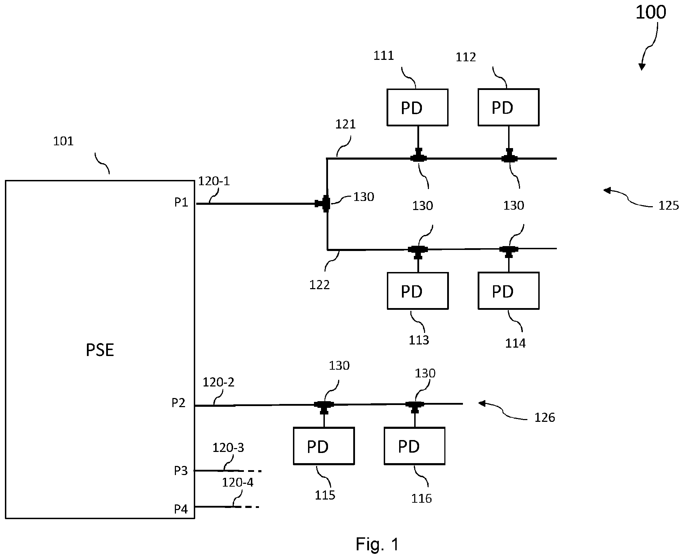

In the following description, the "shape" of a network segment refers to the way the terminals of this network segment are positioned relatively to each other and to the PSE port on the network segment. As described hereinafter with reference to figure 1, a network segments can comprise sub-segments, also called branches or linear buses. Network shapes may cover different types, such as linear, tree and leaf shapes.

The shape of a network segment thus provides different information than the topology of the power network which typically refers to the ports, i.e. how many and which terminals are coupled with each port of the PSE, independently of how they are positioned relatively to each other on each network segment fed by the ports.

Therefore, knowledge of the topology of a network and the shape of each network segments of the network allows having a complete view of the electrical connections of all the terminals, with the PSE and with each other, thereby providing a better idea of power consumption and needs of each terminal.

**Figure 1** is an illustration of a power over cable system 100. The system comprises a PSE 101 coupled with a plurality of powered devices (PDs) 111, 112, 113, 114, 115 and 116 by means of four network cables 120-1, 120-2, 120-3, 120-4.

Each PD 111-116 comprises a terminal device connected to a controller configured to manage the power requirements of the terminal. The terminal is for example a camera unit having the task of capturing a scene and transmitting data content - e.g. video stream(s) - over the network to a destination device which may be another device of the network or a remote device connected to the network. Sufficient electric power needs to be drawn from the cable in order to run the functions of the terminal properly. For that purpose, the controller is notably in charge of controlling the startup of the terminal depending on the power available over the cable.

In the illustrated example, each PD 111-116 is represented as a single device. This is for illustration only. In other embodiments, a powered device may be physically formed by two or more interconnected devices embedding a terminal and one or more controllers. For example, one device may contain the terminal and another one the controller. In the following description, the PD may be equivalently referred to by the terms "PD terminal" or "terminal". Each network cable 120-1, 120-2 respectively connects the plurality of PD terminals 111, 112, 113, 114 and 115 and 116 to the ports P1, P2 of the PSE. Each network cable (e.g. 120-1, 120-2) and associated PD terminals form a network segment (e.g. 125, 126).

In the illustrated example, the network segments 125 and 126 have different shapes: the network segment 125 has a tree shape while the network segment 126 is linear.

More specifically, the network segment 125 is divided in two parallel branches 121, 122 by means of a T connector 130. The PD terminals 111 and 112 are connected in series on the branch 121 and the PD terminals 113 and 114 are connected in series on the branch 122.

On the other network segment 126, the PD 115 and 116 are connected in series to the port P2.

Another shape of network segment, not represented in figure 1, is the leaf shape. This particular shape is characterised by a central PD terminal, connected to one port of the PSE, and also to several terminals such that the several terminals are not connected to each other.

According to general embodiments, a controller of a master terminal determines the relative positions of at least two PD terminals of the same network segment of a power network, such as the power network illustrated in figure 1. The at least two PD terminals and the master PD terminal belong to a plurality of PD terminals all configured to receive power from the same port of the PSE (the at least two PD terminals may or may not include the master PD terminal, meaning that in some embodiments, the controller of the master terminal may determine the relative positions of two slave terminals). The controller of the master PD is configured to perform steps of a method according to embodiments.

In practice, the master PD of the network segment may be selected for example as the PD consuming the greater voltage on the network segment. Naturally, other criteria can be used to elect the master PD.

For the sake of the illustration, the method, applied to the system illustrated in figure 1, helps to determine, for the network segment 125, the relative positions of the PD 111, 112, 113 and 114 compared to the port P1 of the PSE. The method can also be used for determining PDs relative positions compared to the PSE ports of each the network segments of the system, such as the network segment 126. In this way, the shape of the network segment connected to the PSE port may be determined.

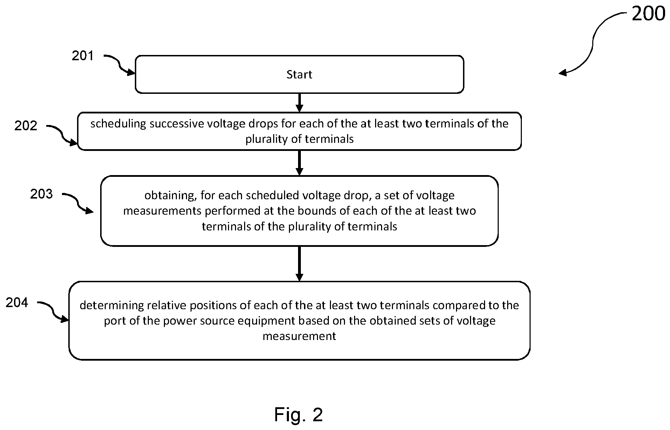

The general flowchart 200 of **figure 2** illustrates general steps of a method according to embodiments, in order to determine the relative position of two (or more) PD terminals of a given network segment. These steps are typically performed by the controller of a terminal acting as a master terminal of the network segment, hereafter called 'master controller'.

The process starts at step 201, when the master controller receives electrical power from the PSE which is switched on. In practice, the master controller identifies which PDs are connected to the same port of the PSE, i.e. on its network segment. This can be done according to the method described in the application GB 201718484.

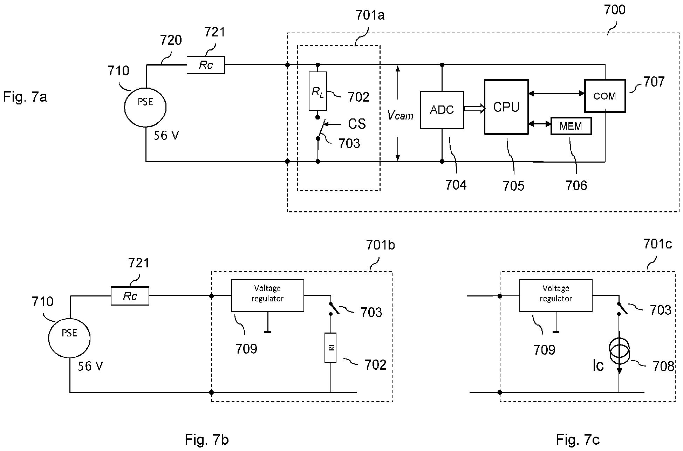

At step 202, the master controller schedules one successive voltage drops for each of at least two terminals of the plurality of terminals of the given network segment. For instance, during this step, the master controller plans (schedules) several successive instants, for each terminal, at which a drop voltage should be perform at the bounds of said terminal. In practice, the controllers that manage power for these terminals close their feeding circuit thereby allowing the terminals to receive power from the PSE during a predetermined duration (voltage drop). The performance of voltage drop is described in further detail with reference to Figures 7a to 7c. Consequently, the voltage drops at each terminal are performed at successive distinct instants.

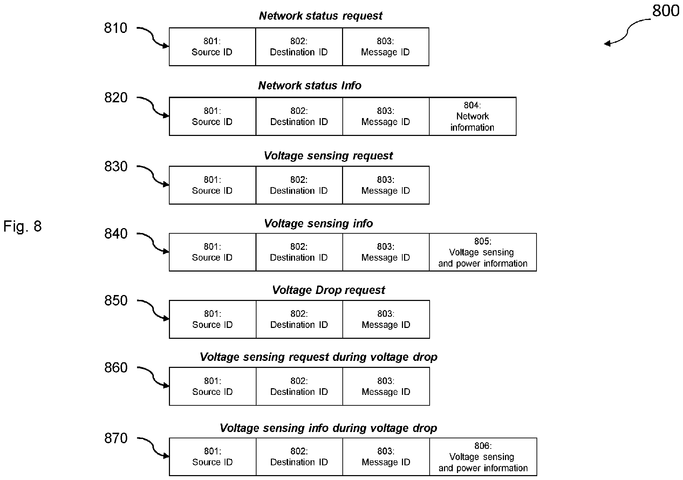

In order to do so, according to embodiments, the master controller sends requests to perform the voltage drops based on the scheduled instants. According to embodiments, the requests may be messages, such as message 850, the format of which is described with reference to Figure 8.

In a first example, the master controller sends such a message at a scheduled instant so that a voltage drop is immediately performed at the bounds of the terminal targeted by the message.

In a second example, the message specifies the instant at which the voltage drop should be performed and the master controller sends this message in advance to the terminal (or its controller), for instance at the beginning of the process, and the voltage drop is performed in due time, i.e. at the instant indicated in the received message.

At step 203, the master controller obtains, for each scheduled voltage drop (i.e. during each voltage drop), a set of voltage measurements performed at the bounds of each of the two terminals.

A set of voltage measurements comprises voltages measurements at some or all the terminal bounds during a voltage drop. Hence, for each performed voltage drop, the master controller obtains an associated set of voltage measurements.

According to some embodiments, additional voltage measurements at the terminals bounds may be performed before and/or after the scheduled voltage drops.

The additional voltage measurements performed outside of the drop voltages, meaning before or after the scheduled voltage drops, enable the terminals of a given network segment to be sorted from the highest voltage to the lower voltage. Having the terminals sorted allows the simplification of the method for determining the relative positions of the terminals of the network segment. Indeed, in general, the terminal with the highest voltage is the closest to the port of the PSE, whereas the terminal with the lowest voltage is the farthest from the PSE on the network segment. Then, the relative position of the terminal with the highest voltage is first determined, and the relative position of the terminal having the lowest voltage is determined at the end.

Consequently, when voltage measurements are performed during each voltage drop and possibly before and/or after all the voltage drops, the master controller may obtain several sets of voltage measurements for one given voltage drop.

As it can be understood from the description above, the voltage drops are scheduled in order to be performed successively. Then, between two successive voltage drops, voltage measurements are performed at the terminals and sent to the master controller.

According to embodiments, these voltage measurements are obtained in response to requests sent by the master controller, for each voltage drop performed according to the scheduling.

For instance, the request may be a message 860, the format of which is described with reference to Figure 8. When the terminal (or its controller) receives the message, voltage measurements at its bounds are performed, typically by its associated controller. According to embodiments, several messages 860 could be sent to the terminals (or their respective controller), during one voltage drop and possibly before and/or after all the voltage drops, in order to cause the controllers to measure voltage at the terminals bounds, during each voltage measurement and possibly before and/or after all the voltage drops.

In response to a message 860, once measurements are made, each PD provides the master controller with the voltage measurements performed at its bounds. For that, for example, the terminal or its controller may use the message 870, the format of which is described in reference to figure 8.

In step 204, the master controller determines relative positions of each of the two terminals compared to the port of the power source equipment based on the obtained sets of voltage measurements.

Based on the sets of obtained voltage measurements, and by the voltage measurements values, the master controller is configured to determine the position of the terminal compared to the PSE port associated with the concerned network segment.

Indeed, voltage measurements at the bounds of a terminal during voltage drops depends on the terminal position in the network segment (i.e. if the terminal is positioned upstream from the other, or on a different branch for example). Then, by characterising the terminal position thanks to its proper electrical characteristics, it may be possible to position each terminal relatively to the others compared to the PSE port.

Embodiments of the present method are not limited to voltages measurements and can be equally performed using any other electrical characteristics, equivalents to voltage measurements.

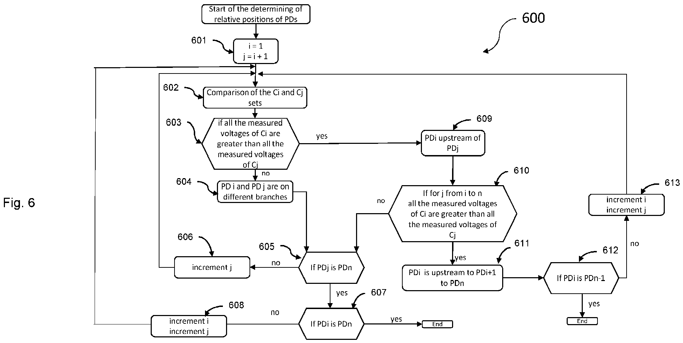

A detailed example of the flow chart of figure 2 is described in reference with figure 6 in the following.

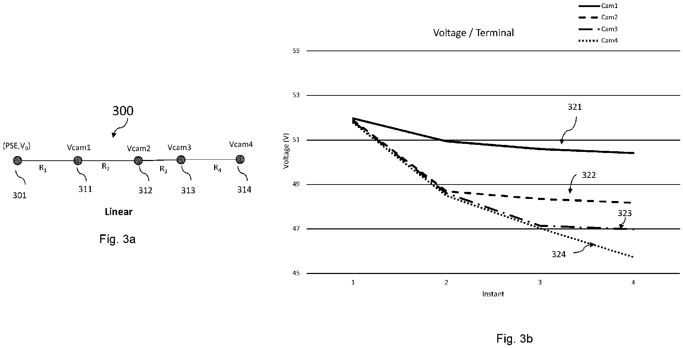

For the sake of the understanding, figures 3a, 3b, 4a, 4b, 5a and 5b illustrate voltage measurements used in the determining step to determine the relative position of the terminals on a given network segment. Voltage measurements may vary depending on the power consumption of the terminals of the given network segment.

The following examples illustrate the fact that:
- when all the values of a set of voltage measurements corresponding to a voltage drop performed at a first terminal are greater than all the values of another set corresponding to a voltage drop performed at a second terminal, it means that the first terminal is connected between the port of the power source equipment and the second terminal, meaning that the first terminal is closer to the port than the second terminal is;
   otherwise (meaning that some values of the set are above those of the other set and some other values are under), it means that the first and the second terminals belong to different branches. According to embodiments in which one voltage drop is performed sequentially for *all* the terminals connected to the network segment, the comparison of the different values of the sets of voltage measurements obtained allow determination of the shape of the network segment.

In **Figure 3a**, a network segment 300 having a linear shape is illustrated, meaning all the terminals of the network segment are on the same branch. The PSE port 301, is connected in series with terminals 311, 312, 313 and 314. The terminals are in this example, cameras, having at their bound a voltage respectively designated by Vcam1, Vcam2, Vcam3 and Vcam4.

Terminals 311, 312, 313 and 314 are connected with each other, and with the PSE port 301 by means of cables, having respectively cable resistances R1, R2, R3 and R4.

**Figure 3b** illustrates charts representing voltages measurements for each voltage drops, at each terminal 311, 312, 313, and 314. The vertical axis represents the voltage values (in volts) and the horizontal axis represents the concerned voltage, Vcam1, Vcam2, Vcam3 and Vcam4 of each terminal 311, 312, 313 and 314.

Thus, the curve 321 represents, the voltages Vcam1, Vcam2, Vcam3 and Vcam4 when a voltage drop is performed at the terminal 311. Similarly, curves 322, 323, 324 are associated with voltage drops performed respectively at terminals 312, 313 and 314.

Consequently, curves 321, 322, 323 and 324 are representation of obtained sets of voltage measurements at terminals 311, 312, 313 and 314 of the network segment 300 associated with voltage drops at each terminal 311, 312, 313 and 314.

From the chart, it may be deduced that all the voltage measurements of the first set represented by the curve 321 are greater than all the voltage measurements of the second set represented by the curve 322, the third set represented by the curve 323 and the fourth set represented by the 324.

Such voltage measurements at the terminals bounds therefore indicate that the terminal 311 is upstream from the terminals 312, 313 and 314 compared to the PSE port 301.

As all the voltage measurements of the second set represented by the curve 322 are greater than all the voltage measurements of the third set represented by the curve 323 and the fourth set represented by the 324, such voltage measurements at the terminals bounds therefore indicates that the terminal 312 is upstream from the terminals 313 and 314 compared to the PSE port 301.

Similarly, as all the voltage measurements of the third set represented by the curve 323 are greater than all the voltage measurements of the fourth set represented by the 324, such voltage measurements at the terminals bounds therefore indicates that the terminal 313 is upstream from the terminal 314 compared to the PSE port 301.

When obtaining sets like the ones illustrated in figure 3b, the master controller can determine that the network 300 segment has a linear shape.

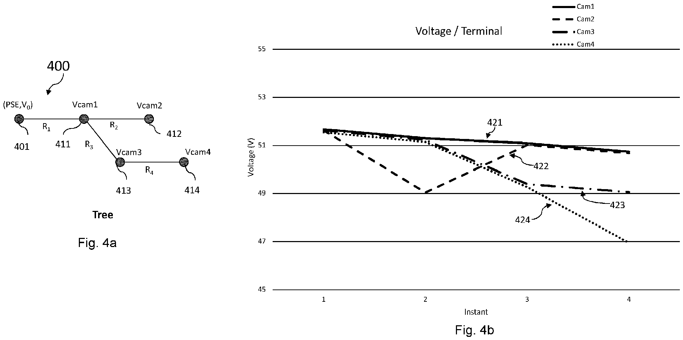

In **Figure 4a**, an example of a network segment 400 having a tree shape is illustrated. The tree shape is characterised by having branches as explained in reference to figure 1.

In this present example, the PSE port 401 is connected to the terminal 411. Terminal 412 is on one branch, and terminals 413, 414 are on another branch, such that terminals 412 and 413 are both connected to terminal 411.

When performing voltage measurements during the voltage drops, the obtained sets, illustrated in **Figure 4b**, are then different from the obtained sets for a segment having a linear shape.

Similarly, to the preceding embodiment, curves 421, 422, 423 and 424 are representation of obtained sets of voltage measurements at terminals 411, 412, 413 and 414 of the network segment 400. Each curve 421, 422, 423 and 424 are respectively associated with voltage drops at each terminal 411, 412, 413 and 414.

As visible in figure 4b, all the voltage measurements of the first set represented by the curve 421 are greater than all the voltage measurements of the second set represented by the curve 422, the third set represented by the curve 423 and the fourth set represented by the 424.

Consequently, as explained above, the voltage measurements indicate that terminal 411 is upstream from the terminals 412, 413 and 414 compared to the PSE port 401.

All the voltage measurements of the third set represented by the curve 423 are greater than all the voltage measurements of the fourth set represented by the curve 424. Likewise, the voltage measurements indicate that terminal 313 is upstream from the terminal 314 compared to the PSE port 301.

From figure 4b, it appears that not all the voltages measurements of the second set represented by curve 422 are greater than the voltages measurements of the third and the fourth sets, represented by curves 423 and 424.

These voltage measurements indicate that terminal 412 is on a different branch of terminals 413 and 414 as visible in figure 4a.

When obtaining sets like the ones illustrated in figure 4b, the master controller can determine that the network segment 400 has a tree shape, with two branches after a first terminal 411, one branch having two terminals 313, 314 and the other branch having one terminal 412.

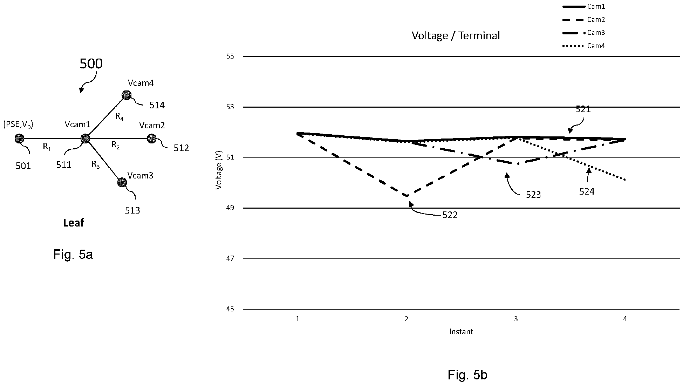

In **Figure 5a**, an example of a network segment 500 having a leaf shape is illustrated. In a leaf shape, it is typical to have a central terminal 511, connected to the PSE port 501, and to terminals 512, 513 and 514. In this case, terminals 512, 513 and 514 are not directly connected to each other. In other words, there is one terminal per branch.

When performing voltage measurements during the voltage drops, the obtained sets, illustrated in **Figure 5b**, are then different from the obtained sets for segments having a linear or tree shape.

As visible in Figure 5b, all the voltage measurements of the first set represented by the curve 521 are greater than all the voltage measurements of the second set represented by the curve 522, the third set represented by the curve 523 and the fourth set represented by the 524.

Thus, these voltage measurements confirm which voltage measurements need to be observed to determine that two terminals are connected in series, as explained hereinbefore with reference to Figure 3a. Consequently, curves 521, 522, 523 and 524 confirm that the terminal 511 is upstream from the terminals 512, 513 and 514 compared to the PSE port 501.

From Figure 5b, it appears that not all the voltage measurements (only two, Vcam3, Vcam4, are greater) of the set represented by the curve 522 are greater than the voltage measurements of the third set represented by the curve 523. Similarly, it appears that not all the voltage measurements (only two, Vcam1, Vcam2, are greater) of the set represented by the curve 523 are greater than the voltage measurements of the fourth set represented by the curve 524.

Thus, these voltage measurements confirm which voltage measurements need to be observed to determine that two terminals are on different branches, as explained hereinbefore with reference to Figure 4a. Consequently, curves 522, 523 and 524 confirm that terminal 512, 513 and 514 each on different branches as visible in figure 5a.

At last, when the controller determines whether all the values of one set of voltage measurements are greater than all the values of another set of voltage measurements:
- if all the voltage measurements of a first set associated with the voltage drop at a first terminal are greater than all the voltage measurements of a second set associated with the voltage drop at a second terminal, then the master controller determines that the first terminal is upstream from the second terminal, relatively to the PSE port associated with the concerned network segment. That is to say that the first terminal and the second terminal are on the same branch, and are connected in series. Likewise, if all the voltage measurements of a first set associated with the voltage drop at a first terminal are greater than all the values of several other sets associated with several other terminals, then, the first terminal is upstream from all the other terminals.
- otherwise, the first terminal and the second terminal are connected on different parallel branches.

The master controller can determine the relative positions of some terminals of a plurality of terminals of the given network, for example two terminals of the plurality of terminals. Naturally, the method can also be used for determining the relative positions of all the terminals of a given network segment compared to the associated port of the PSE, by performing the voltage drops and the voltage measurements to all the terminals of a branch. In this case, the shape of the network segment can be determined.

In order to have a complete view of the relative positions of all the terminals of a system, such the one illustrated in Figure 1, the method may be performed by the controller of the master controller elected on each network segment of the power network.

**Figure 6** is a flow chart 600 detailing steps of a method of determining relative positions of at least two PDs.

The determining of positions is based on the voltage measurements of the three shapes of network identified hereinbefore in reference to figures 3 to 5.

In the following example, a given voltage measurement V is identified using two indexes i and j: Vi,j. The index i corresponds to the terminal at the bounds of which a voltage drop is being performed, while the index j corresponds to the terminal at the bounds of which the measurement has been performed. Both indexes can thus take any value between 1 and n which is equal to the number of terminals connected to the considered network segment the relative positions of which have to be determined.

At step 401 of the algorithm, the two variables i and j are initialised, respectively at 1 and 2. The variables i and j will indicate which set of obtained voltage measurements is analysed.

The set of voltage measurements Ci, comprises voltages measurements when a voltage drop is performed at the terminal i. That is, the set of voltage measurements Ci comprises all the measurements Vi,j performed at the bounds of all the terminals j during the voltage drop at terminal i.

At step 602, the voltage measurements of sets Ci and Cj are compared to each other.

At step 603, if all the voltage measurements of Ci are greater than all the voltage measurements of Cj, it is determined that terminal i is positioned upstream from terminal j compared to the PSE port at step 609. Likewise, at step 610, if for all the sets Cj, Cj+1, ..., Cn, the voltage measurements of Ci is greater than the voltage measurements of Cj, Cj+1, ..., Cn, the master controller performing the algorithm determines that the terminal i is upstream from all the terminal i+1, ..., terminal n compared to the PSE port, at step 611.

At step 603, if at least one voltage measurement of Ci is not greater than the voltage measurements of Cj, the master controller performing the algorithm determines then that terminal i and terminal j are not the same branches at step 604.

Tests 605, 607 and 612 associated with the increment of variables i and j, allows to determine the relative positions of all the terminals of a given segments, in order to have their relative positions to each other compared to the PSE port.

Once having all the relative positions of the terminal of a network segment, the master controller performing the algorithm may build a graph, such ones of figures 3a, 4a, 5a, representing the shape of the network segment. The resulting graph may be recorded and then displayed to a user.

Consequently, the method could be implemented in a computer program product comprising instructions for carrying out the method.

Figure **7a** is a circuit plan 700 that is used here to illustrate performance of a calibrated voltage drop at the bounds of a PD connected to a port 710 of the PSE. The PSE is configured to provide 56V power supply through its port 710. The port 710 is connected to the PD 700 via a cable 720 having a resistance 721.The master PD is similar to the illustrated PD 700.

The PD 700 further comprises a processor 705 ("Central Processing Unit" or CPU), associated with a memory 506.

The PD 700 comprises communication means 707, such as for example Home Plug AV communication means. These communication means help the PD 700 to communicate with others PDs 700 of the system in particular with the master PD. To this end, the processor 705 is configured to control the communication means, in order to send the messages to the master PD.

The PD 700 comprises a voltage sensing unit comprising an Analog Digital Converter (ADC) 704, and a voltage drop unit 701a.

The ADC 704 is configured to measure the voltage at the PD bounds, is electrically connected with the processor 705 which reads the measured voltage value and then records it in the memory 706. The measured value is sent to the master PD by means of the communication means afterwards.

The voltage drop unit 701a comprises a calibrated resistor 702 and a switch 703. According to embodiments, the resistor 702 is about 1KΩ, with 1% tolerance value, and a power dissipation value of 1 W. The processor 705 is configured to control the voltage drop unit 701a, in order to cause a voltage drop.

Thus, when a voltage drop is requested by the master PD, the processor 705 is configured to control the switch 703 by means of a control signal CS provided by processor 705. By closing the switch 703, an extra current passes through the resistor 702, causing then a voltage drop in the cable resistance 721, and therefore at the PD bounds. By opening the switch 703, the voltage at the bounds of the PD 700 is again as in the normal operating mode.

The amplitude of the drop voltage depends on the resistor 702 value, the cable resistance 721 value and of the total power consumption of the PD 700. By sizing these parameters, it is then possible to calibrate the drop voltage amplitude.

The PD 700 also comprises classical power supply unit (not represented) converting the 56V input power into 12V, 5V, 3.3V, 1.5V power supplies. The power supply unit is configured to supply with electricity the several electronic components of the PD 700, such as the components cited hereinbefore.

Figures 7b and 7c illustrates alternatives circuit plans that may be used to perform calibrated voltage drop.

In **Figure 7b**, the voltage drop unit 701b comprises a resistor 702 is disposed downstream from a voltage regulator 709 compared to the PSE port 710. With such a system, the voltage drop amplitude is independent from the PD 700 power consumption. The voltage drop amplitude in such case is performed with a constant power drop, only depending on the constant output voltage of the voltage regulator 709 and the resistor 702 value.

In **Figure 7c**, the voltage drop unit 701c comprises a current generator 708, located downstream from a voltage regulator, in relation with the PSE port 710. The benefit of such a voltage unit 701c is to control the current Ic by means of the current generator 708, and therefore the voltage across the PD 700. Thus, the power drop amplitude may be modulated by varying the current Ic. The value of the power drop amplitude depends then on the difference between the voltage at the PD bounds in normal operation mode, and the voltage at the PD bounds when the PD 700 is switched off.

According to embodiments, the voltage drop may be performed by increasing the voltage across the power segment and by decreasing the power consumption of the PD 700.

**Figure 8** indicates a possible format of messages exchanged in the power over cable system when implementing steps of a method according to embodiments of the invention.

In the illustrated example, all the messages may each comprise a source identifier 801, a destination identifier 802, and a message identifier 803.

The source identifier 801 identifies the entity emitting the message, such as the MAC or IP address of the terminal or of its controller.

The destination identifier 802 identifies the entity targeted by the message, such as the MAC or IP address of the terminal or of its controller.

The message identifier 803 uniquely identifies the message.

In some embodiments, the source ID 801 or the destination ID 802 may not be specified.

The message 810 is a network status request message. It may be used by the master controller, such as terminal 311 in figure 3a, to request a terminal (destination), such as terminal 313 in figure 3a, to provide information of the network status of the terminal.

The message 820 is a network status information message. It may be used by a terminal to provide to the master controller (destination) with its current network status information, that is to say to which port of the PSE the terminal is coupled to.

Messages 810 and 820 are used during step 201 of figure 2, in order to determine for each terminal, in which segments it is positioned. Thus, the master controller, when determining the shape of each segment, to which terminals it should exchange information.

The message 830 is a voltage sensing request message. It may be used by the master controller to request the several terminals (destination) on the power segment to measure the voltage at the bounds of the terminal (Vcam).

The message 840 is a voltage sensing report message. It may be used by a terminal to provide the master controller (destination) with the measured voltage at its bounds (Vcam), and its own power parameters P = f(Vcam). Indeed, the terminal may have typically a power consumption about 10W, varying as function of the electrical voltage at its bounds. The mathematical function to determine the power consumption of the terminal from the electrical voltage at the bounds of the terminal is thus included in the message 840. The power can be expressed as following: *A2* × *V_{cam} ²* + *A1* × *V_{cam}* + *A*0, with *A*2*, A*2 and *A*3 given constants.

The message 850 is a voltage drop request message. It may be used by the master controller to request at the terminals (destination) on the power segment to perform a voltage drop (or voltage pulse).

Message 850 is then used after step 202 of figure 2, to cause voltage drop at the bounds of the terminals receiving the message. Message 850 is sent to each terminal, successively, at instants scheduled by the master controller.

The message 860 is a voltage sensing request message. It may be used by the master controller to request at the terminals (destination) on the power segment to measure the voltage at their bounds Vcam during a voltage drop requested with the help of the message 850.

Thus, when one terminal performed a voltage drop in response to a received message 850, other terminals, disposed in the same segment, receives, during each voltage drop and possibly before and/or after all the voltage drops, each the message 860, to cause them to perform voltage measurements respectively during one voltage drop and possibly before and/or after all the scheduled voltage drops accordingly to step 203 of figure 2.

The message 870 is a voltage sensing report message. It may be used by a terminal, to provide the master controller (destination) with the measured voltage at its bounds (Vcam), and its own power parameters P = f(Vcam) during a voltage drop requested with the help of the message 850. Consequently, in response to received message 860, each terminal sends the measured voltage(s), accordingly to step 203 of figure 2.

Although the present invention has been described hereinabove with reference to specific embodiments, the present invention is not limited to the specific embodiments, and modifications, which lie within the scope of the present invention, will be apparent to a person skilled in the art. In particular, different features from different embodiments may be interchanged, where appropriate. Many further modifications and variations will suggest themselves to those versed in the art upon referring to the foregoing illustrative embodiments, which are given by way of example only and which are not intended to limit the scope of the invention as determined by the appended claims.

## Claims

1. A method of determining relative positions of at least two terminals of a plurality of terminals (111, 112, 113, 114), the plurality of terminals (111, 112, 113, 114) including a master terminal and being connected to the same port (120-1) of a power source equipment (101), the method comprising the following steps performed at a controller of the master terminal:
scheduling (202) successive voltage drops for each of the at least two terminals of the plurality of terminals (111, 112, 113, 114);
obtaining (203), for each scheduled voltage drop, a set of voltage measurements performed at the bounds of each of the at least two terminals of the plurality of terminals (111, 112, 113, 114);
determining (204) relative positions of each of the at least two terminals compared to the port (120-1) of the power source equipment (101) based on the obtained sets of voltage measurements.

2. The method according to claim 1, wherein determining (204) relative positions of the at least two terminals comprises:
determining, if all the values of one set of voltage measurements associated with the scheduled voltage drop at a first terminal of the at least two terminal are greater than all the values of another set of voltage measurements associated with the scheduled voltage drop at a second terminal of the at least two terminals, that the first terminal is upstream from the second terminal, compared to the port of the power source equipment, and otherwise the first terminal and the second terminal are connected on different parallel branches.

3. The method according to claim 1 or 2, wherein scheduling (202) a voltage drop for each of the at least two terminals comprises:
scheduling successive instants for authorizing the voltage drop at each of the at least two terminals.

4. The method according to claim 3, wherein scheduling (202) a voltage drop for each of the at least two terminals further comprises:
sending requests to perform the voltage drops based on the scheduled instants.

5. The method according to any one of claims 1 to 4, wherein obtaining (203), for each scheduled voltage drop, a set of voltage measurements comprises:
requesting voltage measurements at each of the at least two terminals of the plurality, for each voltage drop performed according to the scheduling.

6. The method according to any one of claims 1 to 5, wherein additional voltage measurements at the two terminals are made before and/or after the voltage drops.

7. The method according to any one of claims 1 to 6, wherein obtaining (203), for each scheduled voltage drop, a set of voltage measurements further comprises:
receiving, for each scheduled voltage drop, the set of voltage measurements performed at the bounds of each of the at least two terminals of the plurality of terminals.

8. A controller of a master terminal device configured to determine relative positions of at least two terminals of a plurality of terminals (111, 112, 113, 114), the plurality of terminals including the master terminal and being connected to the same port (120-1) of a power source equipment (101), the controller being configured to perform the following steps:
scheduling (202) successive voltage drops for each of the at least two terminals of the plurality of terminals;
obtaining (203), for each scheduled voltage drop, a set of voltage measurements performed at the bounds of each of the at least two terminals of the plurality of terminals;
determining (204) relative positions of each of the at least two terminals compared to the port of the power source equipment based on the obtained sets of voltage measurements.

9. A computer program product for a programmable apparatus, the computer program product comprising instructions for carrying out the method according to any one of claims when the program is loaded and executed by a programmable apparatus.

10. A non-transitory computer-readable medium storing a program which, when executed by a microprocessor or computer system in a device of a power-over-cable system, causes the device to perform the method according to any one of claims 1 to 7.
